# EUROPÄISCHE PATENTANMELDUNG

(11) **EP 1 044 921 A2**
(43) Veröffentlichungstag der Anmeldung: **18.10.2000**
(21) Anmeldenummer: 00250072.6
(22) Anmeldetag: 29.02.2000
(51) Int. Cl.: B66C 13/26

(54) **Antrieb mit einer Steuerung für ein Hubwerk eines Hebezeuges, insbesondere ein kleinbauendes Hebezeug**

(30) Priorität: 05.03.1999 DE 19911429
(71) Anmelder: MANNESMANN Aktiengesellschaft, 40213 Düsseldorf (DE)
(72) Erfinder: Persico, Giuliano, 58300 Wetter (DE); Stehr, Peter, 58093 Hagen (DE)
(74) Vertreter: Meissner, Peter E., Dipl.-Ing.

(57) **Zusammenfassung**

Die Erfindung betrifft einen Antrieb mit einer Steuerung für ein für ein Hubwerk eines Hebezeugs, insbesondere ein kleinbauendes Hebezeug, das eine von einem Elektromotor angetriebene Trommel aufweist, auf die ein mit einem Lastaufnahmemittel verbundenes Tragmittel auf- und abwickelbar ist, wobei die Hubgeschwindigkeit und die Hubrichtung jeweils von einer Bedienperson mittels Steuerungselementen vorgebbar sind. Um einen Antrieb für ein Hubwerk eines kostengünstigen kleinbauenden Hebezeugs vorzuschlagen, bei dem nach dem Abschalten der Hubbewegung nahezu kein Nachlauf mehr auftritt, so dass insbesondere eine Notabschaltung unter Last als auch eine schnelle Umschaltung der Hubrichtung möglich ist, wird vorgeschlagen, dass der Elektromotor ein Universalmotor (1) ist, dass jeder vorgegebenen Hubgeschwindigkeit ein Wert der Ausgangswechselspannung der Wechselspannungsversorgung (2) des Universalmotors (1) zugeordnet ist, dass die beiden Anschlüsse der Rotorwicklung (30) innerhalb der Reihenschaltung vertauschbar sind und
dass die in Reihe geschalteten Wicklungen (3) zusätzlich von der Wechselstromversorgung (2) trennbar und anschließend nach Vertauschung der beiden Rotorwicklungsanschlüsse (5a,5b) kurzschließbar sind.

## Beschreibung

Die Erfindung betrifft einen Antrieb mit einer Steuerung für ein Hubwerk eines Hebezeugs gemäß dem Oberbegriff des Anspruchs 1.

Unter anderem aus der EP 647 586 B1 ist es bekannt, Antriebe für Hubwerke von Hebezeugen mit Asynchronmotoren als langlebige verschleißarme Antriebsmotoren zu versehen. Der Asynchronmotor ist dabei antriebstechnisch mit einer Trommel verbunden, auf die ein Seil als Tragmittel auf- und abwickelbar ist. Am unteren Ende des Seils ist ein Lastaufnahmemittel, beispielsweise ein Haken, für die Aufnahme einer Last vorgesehen. Ein Nachteil des Asynchronmotors ist dessen relativ hoher Preis, insbesondere beim Einsatz in preisgünstigen Kleinsthebezeugen.

Zur Steuerung des Antriebs werden die Hubgeschwindigkeit und die Hubrichtung von einer Bedienperson jeweils mittels Schaltern und/oder Tastern als Steuerungselemente vorgegeben. Hierzu kann beispielsweise der aus der DE 44 12 557 A1 bekannte Analogtaster verwendet werden. Dieser gibt in Abhängigkeit von der Stellung eines längsverschieblichen Stößels ein Spannungssignal ab, das mittels eines Frequenzumrichters in eine entsprechende Motordrehzahl umgesetzt wird. Für jede Hubrichtung ist dabei ein eigener Analogtaster vorgesehen, der zusätzlich jeweils ein Drehrichtungssignal an die Steuerung des Asynchronmotors abgibt. Zum Anhalten des Hubwerks ist meist eine mechanische Bremse vorgesehen.

In der DE 42 42 671 C2 wird darüber hinaus ein Fahrantrieb mit einem insbesondere permanent erregten Gleichstrommotor und Getriebe für ein Hebezeug vorgeschlagen. Die Drehzahlsteuerung des Gleichstrommotors erfolgt über die Höhe der Gleichspannung der Motorspannungsversorgung, wobei deren Polung die Drehrichtung bestimmt. Zum Bremsen des Fahrantriebs wird vorgeschlagen, als Getriebe ein Schneckengetriebe mit reduziertem Wirkungsgrad zu verwenden, d.h. den Gleichstrommotor ständig mit einer eingeschalteten "Bremse" zu betreiben.

Aus der Veröffentlichung "Bremsen von elektromotorischen Antrieben (II)" in der DE-Zeitschrift "der elektromeister - deutsches elektrohandwerk" Heft 17 /1983, S. 1121 - 1124 ist eine Bremsmethode für Gleichstrommotoren beschrieben. Danach lässt sich bei Gleichstrom-Reihenschlussmotoren eine Motorbremsung sicherstellen, wenn - gleichzeitig mit der Trennung des Gleichstrommotors von der Motorspannungsversorgung und dessen Kurzschließen - die Erregerwicklung umgepolt wird.

Nachteilig ist bei den o.g. Antrieben einschließlich der dazugehörigen Steuerung, dass diese aufgrund der verwendeten Mittel aufwendig und teuer sind.

Die Aufgabe der Erfindung ist es, einen Antrieb für ein Hubwerk eines kostengünstigen kleinbauenden Hebezeugs vorzuschlagen, bei dem nach dem Abschalten der Hubbewegung nahezu kein Nachlauf auftritt, so dass insbesondere eine Notabschaltung unter Last als auch eine schnelle Umschaltung der Hubrichtung möglich ist.

Die Lösung sieht vor, dass der Elektromotor ein Universalmotor mit mindestens einer Statorwicklung und einer Rotorwicklung ist, die in Reihe geschaltet an eine Wechselspannungsversorgung angeschlossen sind, dass jeder vorgegeben Hubgeschwindigkeit ein Wert der Ausgangswechselspannung der Wechselspannungsversorgung zugeordnet ist, dass die beiden Anschlüsse der Rotorwicklung zur Umkehrung der Hubrichtung und zum Anhalten des Hebezeugs innerhalb der Reihenschaltung vertauschbar sind und dass die in Reihe geschalteten Wicklungen jeweils zum Anhalten zusätzlich von der Wechselspannungsversorgung trennbar und nach Vertauschung der beiden Rotorwicklungsanschlüsse kurzschließbar sind. Ein mit Wechselspannung betriebenen Universalmotor mit einer derartigen elektronischen Stoppbremsschaltung für das Hubwerk ermöglicht bei Kleinsthebezeugen eine sehr kostengünstige Lösung, bei der die Hubbewegung ohne aufwendige Bremsvorrichtungen zu jedem Zeitpunkt schnell unterbrochen werden kann, insbesondere zur Notabschaltung unter Last als auch zur schnellen Umschaltung der Hubrichtung. Bei der Stoppbremse wird die gesamte kinetische Energie des Universalmotors über die Wechselwirkung der Magnetfelder der Ständerwicklungen und der Rotorwicklung unmittelbar in einen Kurzschlussstrom und damit in Wärme umgesetzt. Ausgenutzt wird hierbei die Tatsache, dass nach Abschalten der Wechselspannungsversorgung das in den Wicklungen gespeicherte magnetische Feld noch kurzzeitig vorhanden ist. Der Universalmotor kommt aufgrund der bei Hebezeugen immer vorhandenen Übersetzungen auch bei anliegender Nennlast sofort zum Stillstand.

Zur definierten Abschaltung des Universalmotors werden die Wicklungen über einen Widerstand kurzgeschlossen. Sehr kostengünstig ist es weiter, wenn die Wechselspannungsversorgung des Universalmotors eine Phasenanschnitt-Steuerung aufweist, welche vorteilhafterweise aus einfach zu steuernden Triacs gebildet ist.

Die schaltungstechnische Ausführung ist relativ einfach, wenn zur Trennung des Elektromotors von der Wechselspannungsversorgung, zur Vertauschung der Anschlüsse der Rotorwicklung und zum Kurzschließen der Wicklungen mindestens ein Schaltrelais vorgesehen ist. Zweckmäßigerweise ist dieses Schaltrelais von einem einzigen Schalter betätigbar. Das abfallende oder anziehende Schaltrelais schließt oder öffnet die zum Bremsen des Universalmotors erforderlichen Schalter in der erforderlichen zeitlichen Reihenfolge. Dabei können auch große Ströme sicher geschaltet werden. Zur Vereinfachung der Bremsschaltung schaltet das Schaltrelais nacheinander einen Unterbrechungsschalter zur Unterbrechung der Wechselspannungsversorgung, einen Wechselschalter zur Umschaltung der Hubrichtung und einen Kurzschlussschalter zum Kurzschließen der Wicklungen.

Zur Erzielung einer Notabschaltung bei Ausfall der Wechselspannungsversorgung wird vorgeschlagen, dass das Schaltrelais von der Wechselspannungsversorgung eingeschaltet wird. Fällt die Wechselspannungsversorgung aus, so fällt das Schaltrelais ab und löst die Schalter in der oben beschriebenen Reihenfolge zum Notstopp des Universalmotors aus, so dass die Last nicht abstürzt.

Ein Ausführungsbeispiel der Erfindung ist in der Zeichnung dargestellt und wird nachfolgend näher beschrieben. Es zeigen:
- Fig. 1: eine Ansteuerschaltung für einen Universalmotor als Antriebsmotor eines Hubwerks eines Hebezeugs und
- Fig. 2: eine Gesamtantriebsschaltung für das Hubwerk gemäß Fig. 1.

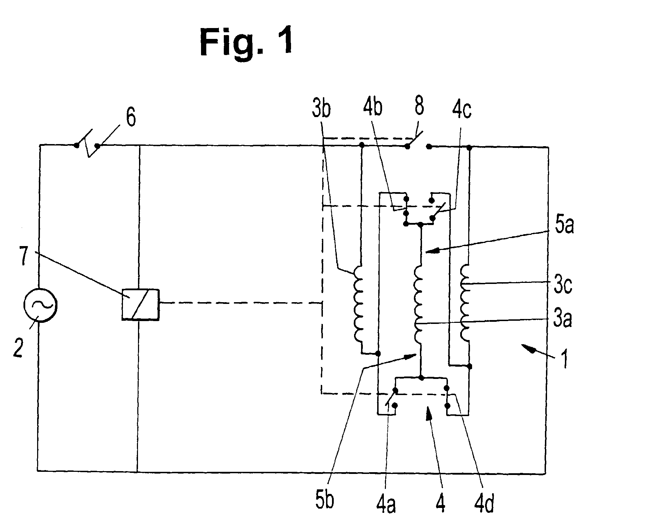

Fig. 1 zeigt eine elektrische Ansteuerschaltung für einen Universalmotor als Antriebsmotor eines nicht gezeigten Hubwerks eines Hebezeugs, das üblicherweise eine Trommel aufweist, auf die ein mit einem Lastaufnahmemittel verbundenes Tragmittel auf- und abwickelbar ist.

Als Antriebsmotor der Trommel dient ein wechselstrombetriebener Universalmotor 1.

Der Universalmotor 1 ist an eine Wechselspannungsversorgung 2 angeschlossen. Er weist eine Rotorwicklung 3a auf, die auf einer nicht gezeigten drehbar gelagerten Rotorwelle angeordnet ist. Beidseitig der Rotorwicklung 3a sind zwei parallel zueinander angeordnete Statorwicklungen 3b und 3c vorgesehen. Alle drei Wicklungen 3a, 3b, 3c sind in Reihe geschaltet. Mittels eines Wechselschalters 4 mit den vier Einzelschaltern 4a - 4d sind die beiden Anschlüsse 5a, 5b der Rotorwicklung 3a innerhalb der Reihenschaltung wechselweise vertauschbar.

Mittels eines Bremsschalter 6 ist der Universalmotor 1 von der Wechselspannungsversorgung 2 trennbar.

Weiter zeigt Fig. 1 ein Schaltrelais 7 im angezogenen Schaltzustand, über das die vier Einzelschalter 4a - 4b des Wechselschalters 4 wechselweise schaltbar sind. Zusätzlich schaltet das Schaltrelais 7 einen Kurzschlussschalter 8, der bei angezogenem Schaltrelais 7 - wie in Fig. 1 gezeigt - geöffnet ist. Alle in Fig. 1 dargestellten Schalter 4, 8 werden vom Schaltrelais 7 nahezu zeitgleich geöffnet bzw. geschlossen, also in den jeweils anderen Schaltzustand geschaltet. Es ist aber auch möglich, das Schalten der Schalter 4, 8 in einer vorgegebenen zeitlichen Reihenfolge auszuführen.

Wenn der Universalmotor angehalten werden soll, wird der Bremsschalter 6 geöffnet, wodurch das Schaltrelais 7 abfällt.

Nahezu zeitgleich oder zeitlich etwas verzögert wird der Wechselschalter 4 durch das Schaltrelais 7 betätigt, was mit einer Vertauschung der Anschlüsse der Rotorwicklung 3a innerhalb der in Reihe geschalteten Wicklungen 3a, 3b, 3c verbunden ist. Verbunden mit dem Abfall des Schaltrelais 7 ist nach Betätigung des Wechselschalters 4 das Schließen des Schalters 8, der die drei in Reihe geschalteten Wicklungen 3a, 3b, 3c kurzschließt.

Die Umschaltung der Einzelschalter 4a - 4b und das nachfolgende Schließen des Kurzschlussschalters 8 führen dazu, dass die noch vorhandenen Magnetfelder der beiden Statorwicklungen 3b, 3c und der Rotorwicklung 3a gegeneinander wirkend zusammengeschaltet sind, so dass es innerhalb des Kurzschlusskreises zur Induzierung eines hohen Kurzschlussstroms und damit zur Umwandlung der gesamten magnetischen Feldenergie in Wärme kommt. Der induzierte Kurzschlussstrom hemmt die Bewegung des Rotors, d.h. er bremst diesen mit großem Bremsmoment ab. Es wird also das für kurze Zeit noch vorhandene Magnetfeld der Wicklungen 3 zur Erzeugung des Bremsmomentes verwendet. Wie sich zeigte, ist dieses Bremsmoment groß genug, um den Universalmotor 1 unmittelbar nach Schließen des Schalters 6 zum Stehen zu bringen.

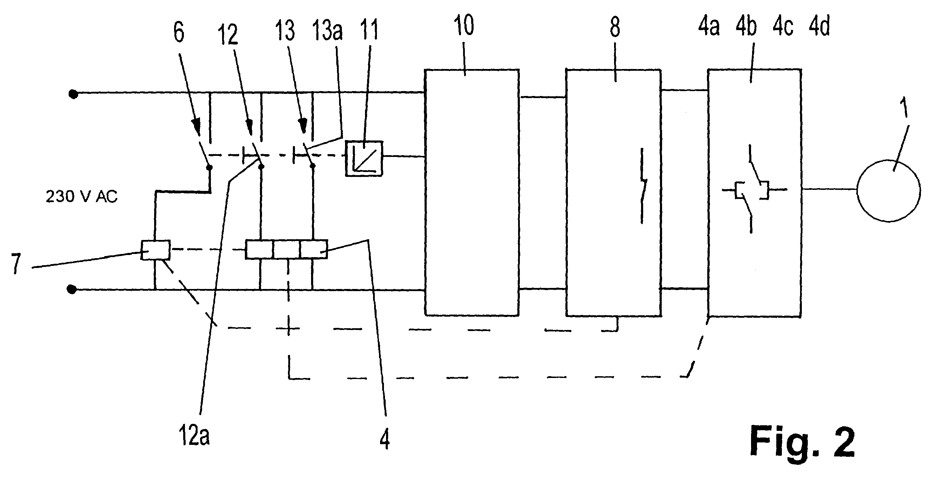

Fig. 2 zeigt eine Gesamtantriebsschaltung des Hubwerks gemäß Fig. 1. Der Universalmotor 1 ist dabei an eine aus elektrisch ansteuerbaren Triacs gebildete Phasenanschnittsteuerung 10 angeschlossen, die selbst an einem Wechselspannungsnetz von 220 Volt angeschlossen ist und deren Ausgangswechselspannung an den in Reihe geschalteten Wicklungen 3a, 3b, 3c des Universalmotors 1 anliegt. Die Phasenanschnitt-Steuerung 10 weist einen Steuereingang auf, an den eine Steuerspannung anlegbar ist, deren Größe die Frequenz der Ausgangswechselspannung bestimmt. Die Frequenz der Ausgangswechselspannung wiederum bestimmt beim Universalmotor 1 dessen Drehzahl.

Die Steuerspannung wird mittels eines Steuerungselements 11 gebildet, das beispielsweise als Widerstandspotentiometer ausgebildet sein kann.

Möglich ist auch ein längsverschieblicher Stößeltaster als Steuerungselement 11, der bei Betätigung die Steuerspannung abgibt, deren Größe jeweils von der Verschiebeposition des Stößels abhängig ist. Vorteilhaft ist insbesondere die Verwendung zweier längsverschieblicher Stößeltaster 12, 13, wie in Fig. 2 gezeigt, jeweils einen 12 für das Heben und einen 13 für das Senken, wobei immer nur einer der beiden Stößeltaster 12, 13 betätigbar ist. Ohne Betätigung durch eine Bedienperson befinden sich die beide Stößeltaster 12, 13 jeweils in ihrer Ruhelage.

Bei Betätigung schließt der jeweilige Stößeltaster 12 oder 13 im Verlauf seines Weges zunächst den Bremsschalter 6, so dass das Schaltrelais 7 anzieht. Anschließend wird vom Stößeltaster 12 oder 13 ein Drehrichtungsschalter 12a bzw. 13a betätigt, der den Wechselschalter 4 jeweils in die Stellung schaltet, die der vorgegebenen Drehrichtung entspricht. Schließlich wird die Drehzahl des Universalmotors 1 mit dem Stößeltaster 12 oder 13 auf den gewünschten Wert eingestellt.

Bei Bewegung des betätigten Stößeltasters 12 oder 13 zurück in seine Ruhelage, beispielsweise mittels einer rückstellenden Federkraft, wird der Bremsschalter 6 wieder geöffnet, wodurch das Schaltrelais 7 abfällt, so dass der Universalmotor 1 auf die oben beschriebene Weise zum Stehen kommt.

Eine anschließende Betätigung des anderen Stößeltasters 13 bzw. 12 führt wiederum zum Schließen des Bremsschalters 6 und nachfolgend ein Betreiben des Universalmotors 1 mit umgekehrter Drehrichtung.

### Bezugszeichenliste:

- 1: Universalmotor
- 2: Wechselspannungsversorgung
- 3: Wicklungen
- 3a: Rotorwicklung
- 3b: Statorwicklung
- 3c: Statorwicklung
- 4: Wechselschalter
- 4a-4d: Einzelschalter des Wechselschalters
- 5a: Anschluss der Rotorwicklung
- 5b: Anschluss der Rotorwicklung
- 6: Bremsschalter
- 7: Schaltrelais
- 8: Kurzschlussschalter
- 10: Phasenanschnitt-Steuerung
- 11: Steuerungselement
- 12: Stößeltaster
- 12a: Drehrichtungsschalter
- 13: Stößeltaster
- 13a: Drehrichtungsschalter

## Patentansprüche

1. Antrieb mit einer Steuerung für ein Hubwerk eines Hebezeugs, insbesondere ein kleinbauendes Hebezeug,
das eine von einem Elektromotor angetriebene Trommel aufweist, auf die ein mit einem Lastaufnahmemittel verbundenes Tragmittel auf- und abwickelbar ist,
wobei die Hubgeschwindigkeit und die Hubrichtung jeweils von einer Bedienperson mittels Steuerungselementen vorgebbar sind,
**dadurch gekennzeichnet**,
dass der Elektromotor ein Universalmotor (1) mit mindestens einer Statorwicklung (3b, 3c) und einer Rotorwicklung (3a) ist, die in Reihe geschaltet an eine Wechselspannungsversorgung (2) angeschlossen sind,
dass jeder vorgegeben Hubgeschwindigkeit ein Wert der Ausgangswechselspannung der Wechselspannungsversorgung (2) zugeordnet ist,
dass die beiden Anschlüsse (5a, 5b) der Rotorwicklung (3a) innerhalb der Reihenschaltung vertauschbar sind und
dass die in Reihe geschalteten Wicklungen (3) zusätzlich von der Wechselstromversorgung (2) trennbar und anschließend nach Vertauschung der beiden Rotorwicklungsanschlüsse (5a, 5b) kurzschließbar sind.

2. Antrieb nach Anspruch 1,
**dadurch gekennzeichnet**,
dass die Wicklungen (3) über einen Widerstand kurzschließbar sind.

3. Antrieb nach einem der Ansprüche 1 oder 2,
**dadurch gekennzeichnet**,
dass die Wechselspannungsversorgung (2) eine Phasenanschnittsteuerung (10) aufweist.

4. Antrieb nach Anspruch 3,
**dadurch gekennzeichnet**,
dass die Phasenanschnittsteuerung (10) aus Triacs gebildet ist.

5. Antrieb nach einem der Ansprüche 1 bis 4,
**dadurch gekennzeichnet**,
dass zur Trennung des Universalmotors (1) von der Stromversorgung (2), zur Vertauschung der Anschlüsse (5a, 5b) der Rotorwicklung (3a) und zum Kurzschließen der Wicklungen (3) mindestens ein Schaltrelais (7) vorgesehen ist.

6. Antrieb nach Anspruch 5
**dadurch gekennzeichnet,**
dass das Schaltrelais (7) von einem Bremsschalter (6) betätigbar ist.

7. Antrieb nach einem der Ansprüche 5 oder 6,
**dadurch gekennzeichnet**,
dass das Schaltrelais (7) von der Wechselstromstromversorgung (2) eingeschaltet wird.

8. Antrieb nach einem der Ansprüche 5 bis 7,
**dadurch gekennzeichnet**,
dass durch das einzige Schaltrelais (7) nacheinander ein Unterbrechungsschalter (Bremsschalter 6) zur Unterbrechung der Wechselstromstromversorgung (2), ein Kurzschlussschalter (8) zum Kurzschließen der Wicklungen (3) und der Wechselschalter (4) zur Vertauschung der Anschlüsse (5a, 5b) der Rotorwicklung (3a) betätigbar ist.
